# EUROPÄISCHE PATENTANMELDUNG

(11) **EP 2 570 218 A2**
(43) Veröffentlichungstag der Anmeldung: **20.03.2013**
(21) Anmeldenummer: 12185083.8
(22) Anmeldetag: 19.09.2012
(51) Int. Cl.: B23F 21/10

(54) **Schneidrad**

(30) Priorität: 19.09.2011 AT 13532011
(71) Anmelder: WFL Millturn Technologies GmbH & Co. KG, 4030 Linz (AT)
(72) Erfinder: Koll, Reinhard, 4040 Lichtenberg (AT)
(74) Vertreter: Jell, Friedrich

(57) **Zusammenfassung**

Es wird ein Schneidrad (1) zum Hobeln und/oder Stoßen eines metallischen Werkstücks, insbesondere eines Zahnrads, mit mindestens einem entlang wenigstens eines Bereichs seines Stirnumfangs (2) angeordneten Schruppabschnitt (6 bzw. 8) und einem dazu modulgleichen Schlichtabschnitt (7, 7' bzw. 9) gezeigt, welche Abschnitte (6, 7, 7' bzw. 8, 9) je mehrere Schneidzähne (3, 3', 3" bzw. 4, 4') aufweisen. Um vorteilhafte Handhabungsverhältnisse zu schaffen, wird vorgeschlagen, dass das mehrteilige Schneidrad (1) einerseits an seinem Schruppabschnitt (6 bzw. 8) Schneidzähne (3, 4) mit Wendeschneidplatten (10 bzw. 11) und andererseits einen auswechselbaren und den Schlichtabschnitt (7, 7' bzw. 9) aufweisenden Schneidradanteil (12, 12' bzw. 13) aufweist.

## Beschreibung

Die Erfindung betrifft ein Schneidrad zum Hobeln und/oder Stoßen eines metallischen Werkstücks, insbesondere eines Zahnrads, mit mindestens einem entlang wenigstens eines Bereichs seines Stirnumfangs angeordneten Schruppabschnitt und einem dazu vorgesehenen, insbesondere modulgleichen, Schlichtabschnitt, welche Abschnitte je mindestens einen Schneidzahn aufweisen.

Um unterschiedliche Arbeitsgänge, wie Roharbeit bzw. Schruppen und nachfolgend die Fertigstellung bzw. das Schlichten, mit einem Zahnradhobelwerkzeug vornehmen zu können, ist aus dem Stand der Technik bekannt (DE613431A), an diesem Schneidrad entlang seines Stirnumfangs Abschnitte mit zueinander unterschiedlich ausgeformten Schneidzähnen vorzusehen. Diesen Abschnitten ist dasselbe Modul gemein, so dass damit Abschnitt für Abschnitt in ein metallisches Werkstück eine Verzahnung fertig gestoßen werden kann. Zwar kann mit Hilfe der Abfolge von unterschiedlichen Abschnitten an einzelnen Schneidzähnen die Belastung gesenkt werden, jedoch zeigten selbst Schneidzähne aus Hartmetall eine vergleichsweise geringe Standfestigkeit, wenn hohe Schnitttiefen und/oder hohe Vorschubgeschwindigkeiten gefordert werden. Außerdem zeigten derartige Werkzeuge unterschiedliche Abnutzungserscheinungen an den Schneidzähnen der Abschnitte, so dass bei einem Versagen eines der Abschnitte das gesamte Schneidrad nicht mehr entsprechend eingesetzt werden kann bzw. ersetzt werden muss. Derartige unterschiedliche Abnutzungserscheinungen treten insbesondere dann auf, wenn verschieden feste Werkstoffe in den Abschnitten zu verwenden sind, um vorgegebene Anforderungsprofile beim Schruppen und Schlichten erfüllen zu können.

Die Erfindung hat sich daher die Aufgabe gestellt, ein universal anwendbares Schneidrad der eingangs geschilderten Art derart auf konstruktiv einfache Weise zu verbessern, dass damit trotz hoher Flexibilität in der Werkstoffwahl der Schneidzähne standfest hohe Schnitttiefen und/oder hohe Vorschubgeschwindigkeiten erfüllbar werden. Außerdem soll das Schneidrad kostengünstig in seiner Herstellung sowie auch in seinem Betrieb sein.

Die Erfindung löst die gestellte Aufgabe dadurch, dass das mehrteilige Schneidrad einerseits an seinem Schruppabschnitt Schneidzähne mit Wendeschneidplatten und andererseits einen auswechselbaren und den Schlichtabschnitt aufweisenden Schneidradanteil aufweist.

Weist das mehrteilige Schneidrad einerseits an seinem Schruppabschnitt Schneidzähne mit Wendeschneidplatten und andererseits einen auswechselbaren und den Schlichtabschnitt aufweisenden Schneidradanteil auf, dann kann für jeden Arbeitsschritt bei der Fertigstellung einer Verzahnung bzw. auch anderen geometrischen Formen eine hohe Standfestigkeit am Schneidrad sichergestellt werden. Einerseits können die Wendeschneidplatten für ein standfestes Schruppen sorgen, andererseits kann eine Auswechselbarkeit des Schneidradanteils mit dem Schlichtabschnitt genutzt werden, beim Schlichten verschlissene Schneidzähne auszutauschen, um das Schneidrad entsprechend einer noch bestehenden Standfestigkeit am Schruppabschnitt weiter verwenden zu können. Außerdem kann damit eine vielseitige Bestückung des Schneidrads mit Abschnitten aus Schneidzähnen unterschiedlicher Materialien bzw. Festigkeiten ermöglicht werden, so dass eine hohe universale Verwendbarkeit des Schneidrads für verschiedenste Arbeitsschritte, beispielsweise dem Schuppen, Schlichten oder auch Glätten, ermöglicht werden kann. Außerdem lassen sich auch Wendeschneidplatten vergleichsweise einfach auswechseln, so dass sich auch hinsichtlich des Schruppabschnitts eine einfache Wartbarkeit ergeben kann. Die erfindungsgemäßen Schrupp- und Schlichtabschnitte sind daher vielseitig anpassbar, entsprechend ihrer Standfestigkeiten einfach anzugleichen sowie auch einfach zu warten, wodurch das Schneidrad gegenüber bekannten Schneidrädern auf konstruktiv einfache und kostengünstige Weise eine hohe Standfestigkeit sicherstellen kann. Der zum Schruppabschnitt vorgesehene Schlichtabschnitt kann beispielsweise bei der Ausbildung einer Evolventenverzahnung am Werkstück modulgleich ausgebildet sein. Im Allgemeinen ist jedoch erwähnt, dass der Zusammenhang zwischen Schrupp- und Schlichtabschnitt lediglich durch eine Bearbeitung an einer gleichen Verzahnung am Werkstuck charakterisiert werden kann, wobei zu diesem Zweck die Schneidzähne von Schrupp- und Schlichtabschnitt unterschiedlich geometrisch ausgebildet sein können.

Die Standfestigkeit des Schlichtabschnitts kann erhöht werden, wenn dieser Abschnitt Schneidzähne mit Hartmetall aufweist. Hartmetall beispielsweise gesinterte Carbidhartmetalle können vorteilhaft vergleichsweise hohe Härte, Verschleißfestigkeit und Warmhärte aufweisen, was eine hohe Standfestigkeit des Schneidrads ermöglichen kann. Weitere Werkstoffe sind durchaus denkbar, beispielsweise Hartmetallgrundkörper mit aufgesinterten Schneiden aus polykristallinem kubischem Bornitrid (CBN). Weiter ist eine Verwendung von Wendeschneidplatten für diese Schneidzähne denkbar, was eine einfache Wartbarkeit ergeben und so für eine Reduktion der Betriebskosten des Schneidrads genutzt werden kann.

Die universale Verwendbarkeit des Schneidrads kann vergleichsweise deutlich gesteigert werden, wenn der Schruppabschnitt ebenso auf einem eigenen auswechselbaren Schneidradanteil vorgesehen ist.

Weist das Schneidrad wenigstens zwei unterschiedliche Schrupp- und Schlichtabschnitte auf, dann können mit einem Schneidrad wenigstens zwei unterschiedliche Verzahnungen hergestellt werden. Außerdem kann damit ein eventuell freier Stirnabschnitt auch für andere Schrupp- und Schlichtabschnitte genutzt werden, was die universale Handhabbarkeit des Schneidrads erhöhen kann.

Der Schneidradanteil kann schnell und einfach handhabbar auswechselbar werden, wenn der Schneidradanteil mit dem Schrupp- und/oder Schlichtabschnitt über eine kraft- und/oder formschlüssige Verbindung am Schneidrad befestigt ist. Außerdem kann damit ein besonders belastbarer Verbund geschaffen werden, der zu einem standfesten Schneidrad führen kann.

Weist der Schupp- und/oder Schlichtabschnitt ein auswechselbares Segment mit mehreren Schneidzähnen auf, dann kann höchste Geometriegenauigkeit auch im Übergang zwischen den Schneidzähnen gefolgt werden. Das Segment kann beispielsweise dann auch aus Vollhartmetall bestehen.

In den Figuren ist beispielsweise der Erfindungsgegenstand anhand eines Ausführungsbeispiels dargestellt. Es zeigen
Fig. 1 eine Draufsicht auf ein Schneidrad und
Fig. 2 eine Seitenansicht des nach Fig. 1 dargestellten Schneidrads.

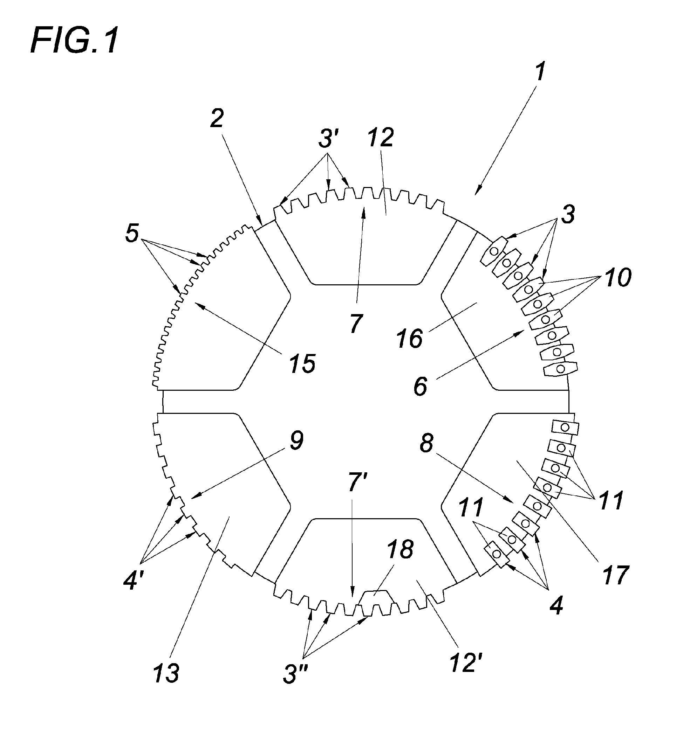

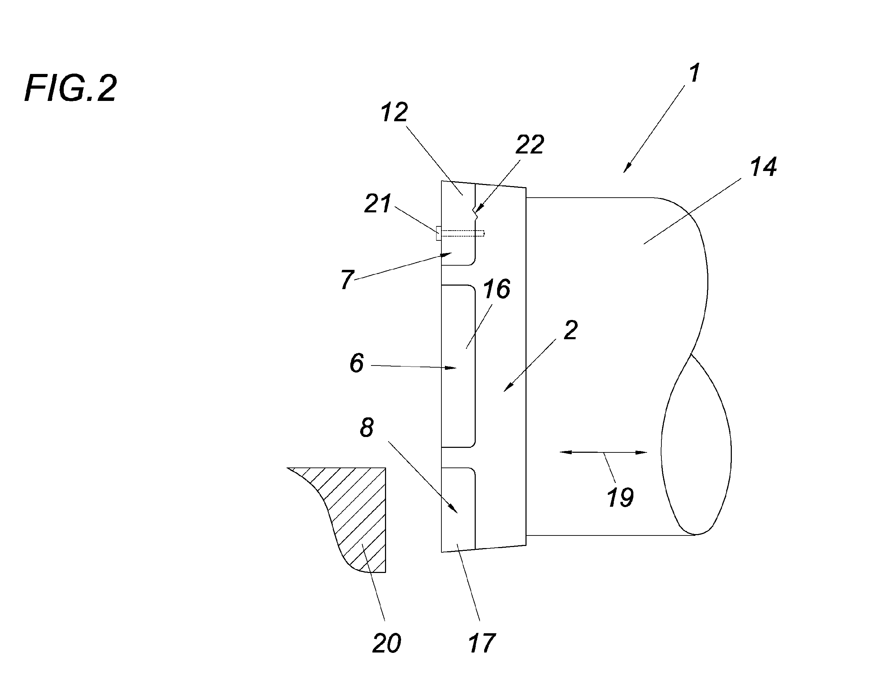

Das nach Fig. 1 beispielsweise dargestellte Schneidrad 1 dient zum Hobeln oder Stoßen eines metallischen Werkstücks 20, um dort damit beispielsweise eine Verzahnung auszubilden. Zu diesem Zweck sind entlang wenigstens eines Bereichs seines Stirnumfangs 2 mehrere Abschnitte mit Schneidzähnen 3, 3', 3", 4, 4', 5 vorgesehen. Die Schneidzähne 3, 3', 3" bzw. 4, 4' sind je einem Schruppabschnitt 6, 8 und einem dazu modulgleichen Schlichtabschnitt 7, 7', 9 zugehörig, so dass mit einem Schneidrad 1 unterschiedliche Verzahnungen fertiggestellt werden können, ohne dass es einem Werkzeugwechsel auf einer nicht näher dargestellten Stoßmaschine bedarf. Zu diesem Zweck kann das Schneidrad 1, wie in Fig. 2 dargestellt, entlang einer Hubbewegung 19 bewegt werden, um eine Verzahnung in das Werkstück 20 zu stoßen, was vergleichsweise mechanisch belastend für das Schneidrad 1 bzw. seine Schneidzähne 3, 3', 3" bzw. 4, 4' ist. Eine vergleichsweise hohe Standfestigkeit des Schneidrads 1 - trotz einer Möglichkeit der Verwendung von unterschiedlich harten Schneidwerkstoffen für die Schneidzähne 3, 3', 3" bzw. 4, 4' - kann dadurch sichergestellt werden, dass das Schneidrad 1 mehrteilig ausgeführt ist. Hierfür sind einerseits Schneidzähne 3 oder 4 an einem Schruppabschnitt 6 oder 8 mit Wendeschneidplatten 10 bzw. 11 ausgestattet. Andererseits weist das Schneidrad 1 auch einen auswechselbaren Schneidradanteil 12, 12' bzw. 13 auf, der den Schlichtabschnitt 7, 7' bzw. 9 des Schneidrads 1 ausbildet. Die Schrupp- und Schlichtabschnitte 6, 8 und 7, 7', 9 sind daher äußerst flexibel aufeinander in der Standfestigkeit angleichbar, sowohl durch eine gezielte Werkstoffauswahl, als auch durch eine einfach handhabbare Auswechselbarkeit deren verschlissenen Schneidzähne 3, 3', 3" bzw. 4, 4'. Dadurch kann sich insgesamt ein besonders standfestes Schneidrad 1 ergeben. Außerdem ist das Schneidrad 1 vergleichsweise kostengünstig im Betrieb, weil der Schneidradträger 14 trotz eines Verschleißes seiner Schneidzähne 3, 3', 3", 4, 4' sowie 5 wiederverwendet werden kann. Zu diesem Zweck ist auch der Schneidabschnitt 15 mit seinen Schneidzähnen 5 auswechselbar am Schneidradträger 14 vorgesehen.

Im Allgemeinen wird erwähnt, dass anstatt der dargestellten Form der Wendeschneidplatten 10 bzw. 11 jegliche andere Formen denkbar sind - auch Wendeschneidplatten mit Sonderform (zum Beispiel Protuberanzprofile). Außerdem wurden zu den Abschnitten 6, 7, 7', 8, 9 und 15 stets mehrere Schneidzähne 3, 3', 3", 4' und 5 dargestellt. Es sind jedoch auch Abschnitte mit nur einem Schneidzahn vorstellbar, beispielsweise zur Ausbildung einer Nut durch einen Schrupp- und einem dazu vorgesehenen Schlichtabschnitt am Schneidrad 1.

Der Schlichtabschnitt 7 bzw. die Schlichtabschnitte 7, 7', 9 weisen je Schneidzähne 3', 3" bzw. 4' aus Hartmetall auf. Ebenso ist vorstellbar, dass auch die Schlichtabschnitte 7, 7', 9 mit Wendeschneidplatten versehen sind, was nicht näher dargestellt worden ist.

Der bzw. die Schruppabschnitte 6, 8 sind ebenso auf einem eigenen auswechselbaren Schneidradanteil 16 bzw. 17 vorgesehen, um damit auch hinsichtlich dieser Abschnitte 6 und 8 höchste Flexibilität in der Auswahl der Schneidzähne 3, 4 gewährleisten zu können.

Wie bereits erwähnt, sind am Schneidrad 1 zwei unterschiedliche Schrupp- und Schlichtabschnitte 6, 7, 7' bzw. 8, 9 vorgesehen. Der modulgleiche Schrupp- und Schlichtabschnitte 6 und 7, 7' kann zur Erstellung einer Evolventenverzahnung am Werkstück genutzt werden. Der Schrupp- und Schlichtabschnitte 8, 9 kann beispielsweise zum Stoßen oder Hobeln eines Keilwellenprofils dienen. Das Schneidrad 1 kann so für zwei unterschiedliche Verzahnungen verwendet werden.

Wie in Fig. 2 erkennbar, sind die Schneidradanteile 12, 12', 13, 16 und 17 - mit nicht näher dargestellten Schrupp- und Schlichtabschnitten - über eine kraftschlüssige Verbindung 21, insbesondere nicht näher dargestellte Schraubverbindungen, am Schneidrad 1 befestigt. Eine schnelle Auswechselbarkeit der Schneidradanteile 12, 12', 13, 16 und 17 ist damit erreichbar. Außerdem sind alternativ sowie in Kombination formschlüssige Verbindungen 22 vorstellbar, um eine genaue Positionierung der Abschnitte bzw. damit auch einen besonders belastbaren Verbund zu schaffen.

In der Fig. 1 kann erkannt werden, dass der Schlichtabschnitt 7' ein auswechselbares Segment 18 mit mehreren Schneidzähnen 3" aufweist. Dieses Segment 18 ermöglich höchste Genauigkeit an deren Schneidzähnen 3" und kann zudem auch für Wartungszwecke von Vorteil sein. Es ist auch vorstellbar, Segmente 18 an Schruppabschnitten 6 bzw. 8 vorzusehen, insbesondere für einen Schlichtabschnitt 7' hat sich diese konstruktive Ausbildung als besonders vorteilhaft hinsichtlich der End- oder Fertigbearbeitung von Werkstücken herausgestellt.

## Patentansprüche

1. Schneidrad zum Hobeln und/oder Stoßen eines metallischen Werkstücks, insbesondere eines Zahnrads, mit mindestens einem entlang wenigstens eines Bereichs seines Stirnumfangs (2) angeordneten Schruppabschnitt (6 bzw. 8) und einem dazu vorgesehenen, insbesondere modulgleichen, Schlichtabschnitt (7, 7' bzw. 9), welche Abschnitte (6, 7, 7' bzw. 8, 9) je mindestens einen Schneidzahn (3, 3', 3" bzw. 4, 4') aufweisen, **dadurch gekennzeichnet, dass** das mehrteilige Schneidrad (1) einerseits an seinem Schruppabschnitt (6 bzw. 8) Schneidzähne (3, 4) mit Wendeschneidplatten (10 bzw. 11) und andererseits einen auswechselbaren und den Schlichtabschnitt (7, 7' bzw. 9) aufweisenden Schneidradanteil (12, 12' bzw. 13) aufweist.

2. Schneidrad nach Anspruch 1, **dadurch gekennzeichnet, dass** der Schlichtabschnitt (7, 7' bzw. 9) Schneidzähne (3', 3" bzw. 4') mit Hartmetall und/oder aus Wendeschneidplatten aufweist.

3. Schneidrad nach Anspruch 1 oder 2, **dadurch gekennzeichnet, dass** der Schruppabschnitt (6 bzw. 8) ebenso auf einem eigenen auswechselbaren Schneidradanteil (16 bzw. 17) vorgesehen ist.

4. Schneidrad nach Anspruch 1, 2 oder 3, **dadurch gekennzeichnet, dass** das Schneidrad (2) zur Bearbeitung von unterschiedlichen Verzahnungen wenigstens zwei unterschiedliche Schrupp- und Schlichtabschnitte (6 und 7, 7' sowie 8 und 9) aufweist.

5. Schneidrad nach einem der Ansprüche 1 bis 4, **dadurch gekennzeichnet, dass** der Schneidradanteil (12, 12', 13, 16 bzw. 17) über eine kraft- und/oder formschlüssige Verbindung (21, 22) am Schneidrad (1) befestigt ist.

6. Schneidrad nach einem der Ansprüche 1 bis 5, **dadurch gekennzeichnet, dass** der Schupp- und/oder Schlichtabschnitt (7') ein auswechselbares Segment (18) mit mehreren Schneidzähnen (3") aufweist.
